# EUROPÄISCHE PATENTSCHRIFT

(11) **EP 0 981 230 B1**
(45) Veröffentlichungstag und Bekanntmachung des Hinweises auf die Patenterteilung: **16.11.2005**
(21) Anmeldenummer: 99202543.7
(22) Anmeldetag: 04.08.1999
(51) Int. Cl.: H04Q 11/04, H04L 12/56

(54) **Koppelvorrichtung mit vollständiger Übertragung des Inhaltes eines Kopffeldes einer Zelle**
Switch with complete transfer of the cell header contents
Commutateur avec transfert complet de l'entête de la cellule

(30) Priorität: 14.08.1998 DE 19836893
(43) Veröffentlichungstag der Anmeldung: 23.02.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Kraemer, Rolf, Dr.-Ing., 22335 Hamburg (DE)
(74) Vertreter: Volmer, Georg

(56) Entgegenhaltungen:
- EP-A- 0 873 035
- US-A- 5 121 384
- KILLAT U ET AL: "A VERSATILE ATM SWITCH CONCEPT" , INNOVATIONS IN SWITCHING TECHNOLOGY. STOCKHOLM, MAY 28 - JUNE 1, 1990, PROCEEDINGS OF THE INTERNATIONAL SWITCHING SYMPOSIUM. (ISS), NEW YORK, IEEE, US, VOL. VOL. 6 SYMP. 13, PAGE(S) 127-134 XP000130908 * Seite 4, Spalte 2, Zeile 35 - Seite 6, Spalte 1, Zeile 11 * * Seite 7, Spalte 1, Zeile 1 - Seite 8, Spalte 2, Zeile 22 *

## Beschreibung

Die Erfindung bezieht sich auf eine nach dem asynchronen Transfermodus arbeitende Koppelvorrichtung mit einem Koppelfeld, welches zur Veränderung ausgewählter Inhalte im Kopffeld einer Zelle vorgesehen ist.

Eine solche Koppelvorrichtung ist beispielsweise aus "Killat et al.: A versatile ATM switch concept, XIII International Switching Symposium, Stockholm, Sweden, May 27 - June 1, 1990, Session A6, Paper # 4, Proceedings, Vol IV, Seiten 127- 134" bekannt. An einem Eingang der Koppelvorrichtung eintreffende Zellen werden einer Übersetzungsschaltung zugeführt, welche Informationen im Kopffeld einer Zelle interpretiert und zumindest teilweise durch neue Werte ersetzt. Nach der Übersetzung wird eine Zelle zum Eingang eines Koppelblocks geliefert, der die Zelle zu wenigstens einem bestimmten Ausgang des Koppelblocks führt. In vielen Anwendungen wird häufig nicht der gesamte Inhalt eines Kopffeldes einer Zelle vom Eingang zum Ausgang der Koppelvorrichtung geführt. Es werden bestimmte Bits im Kopffeld beispielsweise für interne Informationen verwendet.

Der Erfindung liegt die Aufgabe zugrunde, eine Koppelvorrichtung zu schaffen, die trotz Veränderung bestimmter Informationen im Kopffeld einer Zelle die gesamte Information des Kopffeldes der Zelle am Ausgang der Koppelvorrichtung zur Verfügung stellt.

Die Erfindung wird durch eine Koppelvorrichtung der eingangs genannten Art dadurch gelöst,
daß mit jedem Eingang des Koppelfeldes jeweils eine Vorverarbeitungsschaltung und mit jedem Ausgang des Koppelfeldes jeweils eine Nachverarbeitungsschaltung gekoppelt ist,
daß jede Vorverarbeitungsschaltung nach Eintreffen einer Zelle, die einer bestimmten virtuellen Verbindung zugeordnet ist, zur Speicherung von ausgewählten Inhalten des Kopffeldes der Zelle in einer zugeordneten Tabelle vorgesehen ist, wenn zu dieser virtuellen Verbindung kein Eintrag gespeichert ist oder der gespeicherte Eintrag von dem ausgewählten Inhalt des Kopffeldes abweicht,
daß jeder Nachverarbeitungsschaltung eine Tabelle zugeordnet ist, die zur Speicherung einer von einer Vorverarbeitungsschaltung gelieferten ausgewählten Inhalte zu einer virtuellen Verbindung vorgesehen ist, und
daß eine Nachverarbeitungsschaltung nach Empfang einer Zelle einer bestimmten virtuellen Verbindung zur Ersetzung eines ausgewählten Inhaltes des Kopffeldes dieser Zelle durch den Eintrag dieser virtuellen Verbindung in der zugeordneten Tabelle vorgesehen ist.

Erfindungsgemäß ist eine Vorverarbeitungsschaltung dazu vorgesehen, daß diese prüft, ob in einer zugeordneten Tabelle schon ein Eintrag mit einem ausgewählten Inhalt des Kopffeldes dieser Zelle vorliegt. Der ausgewählte Inhalt sollte mindestens die Bits des Kopffeldes umfassen, die in dem nachfolgenden Koppelfeld verändert werden. Ist kein Eintrag in der Tabelle vorhanden oder ist ein zu dieser virtuellen Verbindung der Zelle gehöriger Eintrag nicht mit dem ausgewählten Inhalt des Kopffeldes identisch, wird dieser Inhalt in der Tabelle abgespeichert. Ein Inhalt der in einer Tabelle abgelegt wird, wird anschließend zu wenigstens einer Nachverarbeitungsschaltung übertragen und in einer zugeordneten Tabelle abgelegt. Nach Empfang einer zu einer bestimmten virtuellen Verbindung gehörigen Zelle in der Nachverarbeitungsschaltung ersetzt der in der Tabelle gespeicherte Inhalt den entsprechenden Inhalt im Kopffeld der empfangenen Zelle. Eine einer Vor- oder Nachverarbeitungsschaltung zugeordnete Tabelle kann entweder ein Bestandteil der Vor- oder Nachverarbeitungsschaltung oder ein eigenständiges Schaltelement sein. Durch die Hinzufügung der Vor- und Nachverarbeitungsschaltungen und Ersetzung von bestimmten Bits im Kopffeld wird trotz einer Veränderung der bestimmten Bits im Kopffeld durch den Koppelblock eine Zelle mit der Information von der Nachverarbeitungsschaltung geliefert, die vor dem Eintritt in das Koppelfeld vorhanden waren. Hierbei ist aber zu beachten, daß eine Veränderung von bestimmten die virtuelle Verbindung kennzeichnenden VCI- und VPI-Werten aufgrund einer Übersetzung im Koppelfeld nicht als Veränderung von Inhalten des Kopffeldes aufzufassen ist.

In Patentanspruch 2 ist eine weitere Funktion der Vorverarbeitungsschaltung angegeben. Diese speichert nicht nur den ausgewählten Inhalt eines Kopffeldes, sondern veranlaßt auch die Lieferung zu wenigstens einer Nachverarbeitungsschaltung mittels einer Zelle.

Die Auswertung dieser von einer Nachverarbeitungsschaltung empfangenen Zelle wird in Patentanspruch 3 erläutert. In Patentanspruch 4 wird eine Alternative für die Lieferung des ausgewählten Inhaltes eines Kopffeldes zu wenigstens einer Tabelle einer Nachverarbeitungsschaltung aufgezeigt.

Eine Ausführungsform des Koppelfeldes mit einfacher Erweiterungsmöglichkeit von Ein- und Ausgängen des Koppelfeldes gibt Anspruch 5 an.

Ausführungsbeispiele der Erfindung werden nachstehend anhand der Zeichnungen näher erläutert. Es zeigen:
- Fig. 1: ein Ausführungsbeispiel einer nach dem asynchronen Transfermodus (ATM) arbeitenden Koppelvorrichtung,
- Fig. 2: ein weiteres Ausführungsbeispiel einer Koppelvorrichtung und
- Fig. 3: den prinzipiellen Aufbau einer in Fig. 2 zu verwendenden Vermittlungskomponente.

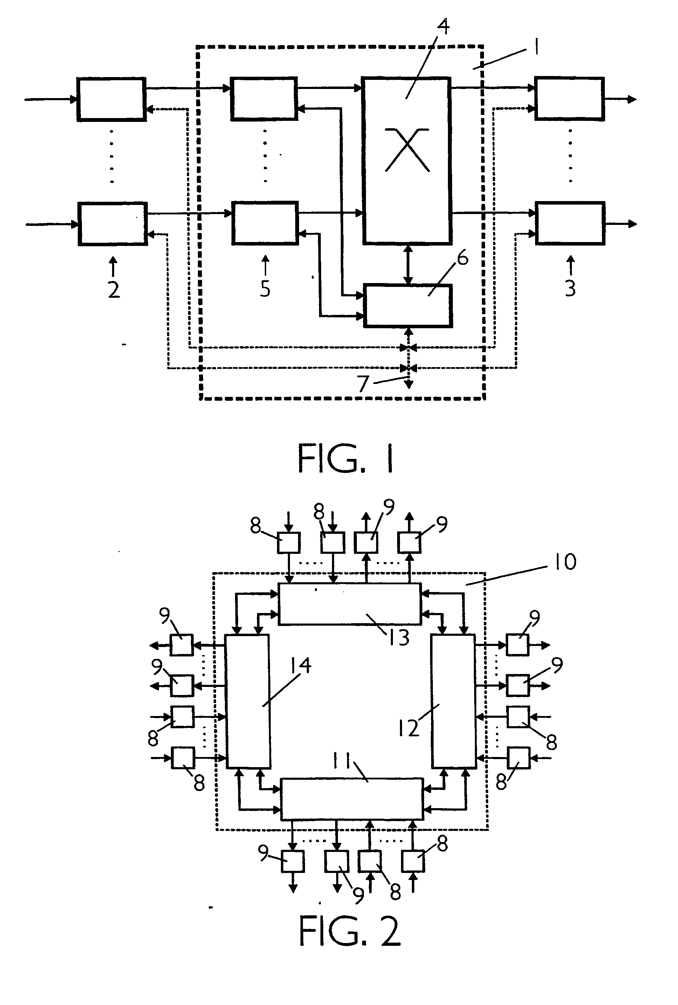

In Fig. 1 ist ein Ausführungsbeispiel einer nach dem asynchronen Transfermodus (ATM) arbeitenden Koppelvorrichtung mit einem Koppelfeld 1 und mehreren Vorverarbeitungsschaltungen 2 und mehreren Nachverarbeitungsschaltungen 3 dargestellt. Das Koppelfeld 1 enthält einen Koppelblock 4, mehrere Übersetzungsschaltungen 5 und eine Steuerschaltung 6. Jeweils ein Eingang des Koppelblocks 4 ist mit einer Übersetzungsschaltung 5 gekoppelt und jeweils ein Ausgang des Koppelblocks 4 mit einer Nachverarbeitungsschaltung 3. Jede Übersetzungsschaltung 5 ist mit jeweils einer Vorverarbeitungsschaltung 2 gekoppelt. Die Eingänge der Koppelvorrichtung bilden die Eingänge der Vorverarbeitungsschaltungen 2 und die Ausgänge der Koppelvorrichtung die Ausgänge der Nachverarbeitungsschaltungen 3. Die Steuerschaltung 6 welche insbesondere zur Steuerung des Koppelblocks 4 dient, ist mit jeder Übersetzungsschaltung 5 und ggf. über ein externes Bussystem 7 (durch eine unterbrochene Linie dargestellt) mit den Vor- und Nachverarbeitungsschaltungen 2 und 3 gekoppelt.

Die in Fig. 1 gezeigte Koppelvorrichtung ist beispielsweise Bestandteil eines Netzwerkes, welches weitere Koppelvorrichtungen und Terminals enthält. Ein solches nach dem asynchronen Transfermodus (ATM) arbeitendes Netzwerk eignet sich für alle Dienste, z.B. zur Sprachübertragung, zur Verteilung von Videosignalen und zur Datenkommunikation. Die mit Hilfe des asynchronen Transfermodus zu übertragenden Nachrichten oder Informationen werden in Pakete gleicher Länge (Zellen) gepackt, wodurch das Netzwerk nur gleichartige Pakete unabhängig von dem verwendeten Dienst oder der Applikation überträgt. Eine Zelle enthält ein Kopffeld mit 5 Byte, das Wege- und Steuerinformationen enthält, und ein Informationsfeld mit 48 Byte, das Daten enthält.

Vor dem Nachrichten- oder Informationstransfer (Datentransfer) muß eine virtuelle Verbindung aufgebaut und nach Beendigung des Datentransfers wieder abgebaut werden, was als Signalisierung bezeichnet wird. Dabei wird zwischen dem Terminal (user side) und dem Netzwerk (network side) eine Vereinbarung über die gewünschten Übertragungseigenschaften, wie Bandbreite, Fehlerrate und Laufzeit getroffen.

Zur Übertragung der Signalisierungsinformationen werden Zellen verwendet, die als Kontrollzellen bezeichnet werden. Nach einem Verbindungsaufbau, wenn für die Übertragung zwischen zwei Endgeräten ein virtueller Kanal zur Verfügung gestellt worden ist, werden die Nutzdaten über Zellen transportiert, die als Nutzzellen bezeichnet werden. Die beiden Zellarten können über eine bestimmte Information im Kopffeld einer Zelle unterschieden werden.

Bestimmte Bits im Kopffeld einer Zelle sind für den VCI (virtual channel identifier) reserviert. Diese Angabe gibt eine virtuelle Verbindung an. Des weiteren sind bestimmte Bits im Kopffeld der Zelle für den VPI (virtual path identifier) reserviert, der ein Bündel mehrerer virtueller Verbindungen angibt. Für den VPI sind im Kopffeld der Zelle 8 bis 12 Bit und für den VCI 16 Bit vorgesehen.

Die VCI und VPI im Kopffeld einer eintreffenden Zelle werden in einer Koppelvorrichtung verändert, d.h. mit einem anderen VCI- und VPI-Wert belegt. Dies wird als Übersetzung bezeichnet. Eine solche Übersetzungsfunktion führen in dem Ausführungsbeispiel der Koppelvorrichtung nach Fig. 1 die Übersetzungsschaltungen 5 durch. Während des Verbindungsaufbaus werden von einem übergeordneten Managementsystem des Netzwerks Kontrollzellen zu der Steuerschaltung 6 des Koppelfeldes 1 gesendet, welche u.a. Angaben über VCI- und VPI-Werte enthalten. Nachdem die Steuerschaltung solche Kontrollzellen empfangen hat, legt diese in einer Tabelle einer Übersetzungsschaltung 5 die VCI- und VPI-Werte ab, welche eintreffende Zellen aufweisen können, und die VCI- und VPI-Werte, welche die weiterzuleitende Zelle an Stelle der alten VCI- und VPI-Werte erhält.

Es sei im folgenden vorausgesetzt, daß der Koppelblock 4 in dem Ausführungsbeispiel nach Fig. 1 einige Bits im Kopffeld einer Zelle verändert. Damit aber die gesamte Information des Kopffelds, welche vor dem Eintritt einer Zelle in das Koppelfeld 1 vorliegt, auch nach dem Austritt aus dem Koppelfeld 1 dem Netzwerk zur Verfügung steht, sind erfindungsgemäß die Vorverarbeitungsschaltungen 2 und die Nachverarbeitungsschaltungen 3 mit dem Koppelfeld 1 verbunden.

Die Vor- und Nachverarbeitungsschaltungen 2 und 3 können beispielsweise als Zustandsmaschinen (state machines) ausgebildet sein. Eine Vorverarbeitungsschaltung 2 enthält eine Tabelle, in der zu einer bestimmten virtuellen Verbindung (also zu einem VCI- und VPI-Wert) der Inhalt des entsprechenden Kopffeldes abgelegt ist. Trifft eine Nutzzelle in einer Vorverarbeitungsschaltung 2 ein, wird überprüft, ob der Inhalt des Kopffeldes dieser virtuellen Verbindung in der Tabelle der Vorverarbeitungsschaltung 2 abgelegt ist. Ist dies der Fall wird die Nutzzelle weitergeleitet. Falls noch kein Eintrag in der Tabelle existiert oder falls der Inhalt des Kopffeldes vom in der Tabelle gespeicherten Inhalt abweicht, werden von der Vorverarbeitungsschaltung 2 weitere Aktionen durchgeführt. Es wird eine Kontrollzelle erzeugt, die im folgenden als vorauseilende Kontrollzelle bezeichnet und die dem Koppelfeld 1 geliefert wird. Die Kontrollzelle enthält in ihrem Informationsfeld den kompletten Inhalt des Kopffeldes der überprüften Zelle. Wenn von der überprüften Zelle noch kein Eintrag in der Tabelle der Vorverarbeitungsschaltung 2 vorhanden ist, wird ein neuer Eintrag in der Tabelle erzeugt oder es wird ein Tabelleneintrag aktualisiert, wenn der Inhalt des Kopffeldes der überprüften Zelle vom in der Tabelle gespeicherten Inhalt abweicht. Anschließend wird die überprüfte Zelle zum Koppelfeld 1 gesendet.

Der Koppelblock 4 entnimmt durch Auswertung der VCI- und VPI-Werte den Bestimmungsort einer Zelle. Der Bestimmungsort einer vorauseilenden Kontrollzelle, die von einer Vorverarbeitungsschaltung 2 geliefert wird, ist eine Nachverarbeitungsschaltung 3. Eine Nachverarbeitungsschaltung 3 enthält ebenfalls eine Tabelle, in der zu einer bestimmten virtuellen Verbindung der Inhalt des entsprechenden Kopffeldes abgelegt ist. Nach Eintreffen einer vorauseilenden Kontrollzelle wird der Inhalt dieser Kontrollzelle in der Tabelle der Nachverarbeitungsschaltung 3 gespeichert. Werden Nutzzellen von einer Nachverarbeitungsschaltung 3 empfangen, ersetzt diese den Inhalt des Kopffeldes der ankommenden Nutzzelle durch den in der Tabelle der Nachverarbeitungsschaltung 3 gespeicherten Inhalt dieser virtuellen Verbindung, die durch den VCI- und VPI-Wert gekennzeichnet ist. Diese Form der Übertragung, bei der zuerst eine vorauseilende Kontrollzelle mit dem Inhalt des Kopffeldes der zugeordneten Nutzzelle und dann die eigentliche Nutzzelle von einer Vorverarbeitungsschaltung 2 zu einer Nachverarbeitungsschaltung 3 übertragen wird, wird als transparente Übertragung von Nutzzellen bezeichnet.

Es sei noch erwähnt, daß der Inhalt einer Kopfzelle in einer Tabelle der Vorverarbeitungsschaltung und der Tabelle einer Nachverarbeitungsschaltung möglicherweise aufgrund der Übersetzung in einer Übersetzungsschaltung 5 der VCI- und/oder VPI-Werte unterschiedlich sind. Die restlichen Bits der in den Tabellen gespeicherten Inhalte sind jedoch identisch. Unter dem Inhalt eines Kopffeldes werden also somit alle die Bits verstanden, die nicht dem VCI- und/oder VPI zugeordnet sind. Das bedeutet, daß die VCI-Werte oder die VPI-Werte oder die VPI- und VCI-Werte als Tabellenadresse für den Inhalt einer Kopfzelle dienen.

Wie bei anderen virtuellen Verbindungen üblich, muß auch vor der Übertragung einer vorauseilenden Kontrollzelle ein bei ATM-Systemen üblicher Verbindungsaufbau zwischen einer Vorverarbeitungsschaltung 2 und einer Nachverarbeitungsschaltung 3 aufgebaut werden. Hierbei werden - wie oben erwähnt - die für die Signalisierung notwendigen Kontrollzellen verwendet.

Anstatt die Tabelle einer Nachverarbeitungsschaltung 3 durch Lieferung einer vorauseilenden Kontrollzelle zu aktualisieren, kann dies auch mit Hilfe der Steuerschaltung 6 durchgeführt werden. Hierbei wird der Steuerschaltung 6 über das Bussystem 7 der Inhalt des Kopffeldes einer virtuellen Verbindung von einer Vorverarbeitungsschaltung 2 zugeführt. Die Steuerschaltung 6 fügt diese Information in die Tabelle einer Nachverarbeitungsschaltung 3 ein und aktualisiert somit deren Tabelleninhalt.

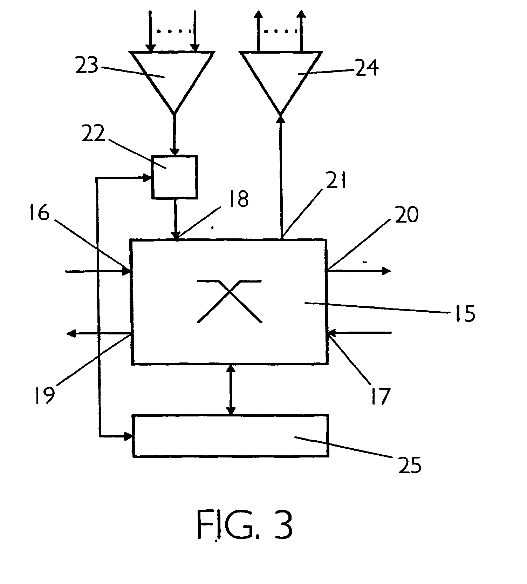

In Fig. 2 ist ein weiteres Ausführungsbeispiel einer Koppelvorrichtung mit mehreren Vor- und Nachverarbeitungsschaltungen 8 und 9 und einem Koppelfeld 10 dargestellt. Das Koppelfeld 10 enthält bei diesem Ausführungsbeispiel vier in einem Doppelring geschaltete Vermittlungskomponenten 11 bis 14. Eine solche Vermittlungskomponente 11 bis 14 kann die "Ein-Chip ATM-Vermittlungskomponente CMC 155" (single chip ATM switch) von Philips sein. Der prinzipielle Aufbau einer solchen Vermittlungskomponente 11 bis 14 ist in Fig. 3 gezeigt. Ein Koppelblock 15 besitzt drei Eingänge 16 bis 18 und drei Ausgänge 19 bis 21. Die beiden Eingänge 16 und 17 und die beiden Ausgänge 19 und 20 des Koppelblocks 15 bilden Ringanschlüsse und sind mit Ringanschlüssen von Koppelblöcken anderer Vermittlungskomponenten verbunden. Der Eingang 18 ist über eine Übersetzungsschaltung 22 mit einem Multiplexer 23 gekoppelt, an dessen Eingänge Vorverarbeitungsschaltungen 8 angeschlossen sind. Der Ausgang 21 des Koppelblocks 15 ist über einen Demultiplexer 24 mit Nachverarbeitungsschaltungen 9 gekoppelt. Des weiteren weist die Vermittlungskomponente noch eine Steuerschaltung 25 auf, die zur Steuerung des Koppelblocks 15 vorgesehen ist und die mit der Übersetzungsschaltung 22 verbunden ist. Gegebenenfalls kann die Steuerschaltung 25 auch über Leitungen mit den entsprechenden Vor- und Nachverarbeitungsschaltungen 8 und 9 verbunden sein.

Das Koppelfeld 10 der Fig. 2 arbeitet auf ähnliche Art wie das Koppelfeld nach der Fig. 1. Dieses Koppelfeld kann jedoch auf einfache Weise mit neuen Ein- und Ausgängen durch Hinzufügung einer Vermittlungskomponente erweitert werden.

## Patentansprüche

1. Nach dem asynchronen Transfermodus arbeitende Koppelvorrichtung mit einem Koppelfeld (1, 10), welches zur Veränderung ausgewählter Inhalte im Kopffeld einer Zelle vorgesehen ist,
**dadurch gekennzeichnet,**
**daß** mit jedem Eingang des Koppelfeldes (1, 10) jeweils eine Vorverarbeitungsschaltung (2, 8) und mit jedem Ausgang des Koppelfeldes (1, 10) jeweils eine Nachverarbeitungsschaltung (3, 9) gekoppelt ist,
**daß** jede Vorverarbeitungsschaltung (2, 8) nach Eintreffen einer Zelle, die einer bestimmten virtuellen Verbindung zugeordnet ist, zur Speicherung von ausgewählten Inhalten des Kopffeldes der Zelle in einer zugeordneten Tabelle vorgesehen ist, wenn zu dieser virtuellen Verbindung kein Eintrag gespeichert ist oder der gespeicherte Eintrag von dem ausgewählten Inhalt des Kopffeldes abweicht,
**daß** jeder Nachverarbeitungsschaltung (3, 9) eine Tabelle zugeordnet ist, die zur Speicherung einer von einer Vorverarbeitungsschaltung (2, 8) gelieferten ausgewählten Inhalte zu einer virtuellen Verbindung vorgesehen ist, und
**daß** eine Nachverarbeitungsschaltung (3, 9) nach Empfang einer Zelle einer bestimmten virtuellen Verbindung zur Ersetzung eines ausgewählten Inhaltes des Kopffeldes dieser Zelle durch den Eintrag dieser virtuellen Verbindung in der zugeordneten Tabelle vorgesehen ist.

2. Koppelvorrichtung nach Anspruch 1,
**dadurch gekennzeichnet,**
**daß** eine Vorverarbeitungsschaltung (2, 8) außer zur Speicherung des ausgewählten Inhaltes eines Kopffeldes in der zugeordneten Tabelle auch zur Erzeugung einer Zelle vorgesehen ist, die in ihrem Informationsfeld den ausgewählten Inhalt des Kopffeldes enthält, und
**daß** die Vorverarbeitungsschaltung (2, 8) zur Sendung dieser Zelle über das Koppelfeld (1, 10) zu wenigstens einer Nachverarbeitungsschaltung (3, 9) vorgesehen ist.

3. Koppelvorrichtung nach Anspruch 1,
**dadurch gekennzeichnet,**
**daß** eine Nachverarbeitungsschaltung (3, 9) zum Empfang einer Zelle mit dem ausgewählten Inhaltes eines Kopffeldes und zur Speicherung dieses Inhaltes in der zugeordneten Tabelle vorgesehen ist.

4. Koppelvorrichtung nach Anspruch 1,
**dadurch gekennzeichnet,**
**daß** eine Vorverarbeitungsschaltung (2) außer zur Speicherung des ausgewählten Inhaltes eines Kopffeldes in der zugeordneten Tabelle auch zur Lieferung dieses Inhaltes über ein von eine Steuerschaltung (6) zur Steuerung des Koppelfeldes (1) gesteuertes Bussystem (7) zu wenigstens einer zugeordneten Tabelle einer Nachverarbeitungsschaltung (9) vorgesehen ist.

5. Koppelvorrichtung nach Anspruch 1,
**dadurch gekennzeichnet,**
**daß** das Koppelfeld (10) mehrere in einem Ring geschaltete Vermittlungskomponenten (11 bis 14) enthält, welche
- jeweils einen Koppelblock (15) mit Ringeingängen (16, 17) und Ringausgängen (19, 20) und einem weiteren Eingang (18) und weiteren Ausgang (21),
- eine an dem weiteren Eingang (18) angeschlossene Übersetzerschaltung (22),
- einem mit der Übersetzerschaltung (22) gekoppelten Multiplexer (23) zum Empfang von Zellen von Vorverarbeitungsschaltungen (8),
- einem mit dem weiteren Ausgang (21) gekoppelten Demultiplexer (24) zur Lieferung von Zellen an Nachverarbeitungsschaltungen (9) und
- eine Steuerschaltung (25) wenigstens zur Steuerung des Koppelblocks (15) umfaßt.

## Claims

1. A switching network which operates in accordance with the asynchronous transfer mode and which comprises a switching unit (1, 10) which is provided in the header field of a cell to change the selected contents in the header field, **characterized in that** a pre-processing circuit (2, 8) is coupled to each input of the switching unit (1, 10), and a post-processing circuit (3, 9) is coupled to each output of the switching unit (1, 10),
upon the arrival of a cell, which is assigned to a specific virtual connection, each pre-processing circuit (2, 8) is provided to store the selected contents of the header field of the cell in an associated table if no entry is stored in connection with this virtual connection or if the stored entry deviates from the selected contents of the header field,
a table is assigned to each post-processing circuit (3, 9), which table is provided to store the selected contents supplied by a pre-processing circuit (2, 8) which is associated with a virtual connection, and
after the reception of a cell associated with a specific virtual connection, a post-processing circuit (3, 9) is provided to replace a selected contents of the header field of this cell by entering this virtual connection into the associated table.

2. A switching network as claimed in claim 1, **characterized in that** a pre-processing circuit (2, 8) not only serves to store the selected contents of a header field in the associated table but also to generate a cell which contains the selected contents of the header field in its information field, and that the pre-processing circuit (2, 8) is provided to send this cell, via the switching unit (1, 10), to at least a post-processing circuit (3, 9).

3. A switching network as claimed in claim 1, **characterized in that** a post-processing circuit (3, 9) is provided to receive a cell with the selected contents of a header field, and to store this contents in the associated table.

4. A switching network as claimed in claim 1, **characterized in that** a pre-processing circuit (2) not only serves to store the selected contents of a header field in the associated table but also to supply this contents, via a bus system (7) controlled by a control circuit (6) for controlling the switching unit (1), to at least one associated table of a post-processing circuit (9).

5. A switching network as claimed in claim 1, **characterized in that** the switching unit (10) comprises a plurality of switching components (11 to 14) which are arranged in a ring, and which each comprise
a switching block (15) with ring inputs (16, 17) and ring outputs (19, 20), and a further input (18) and a further output (21),
a translation circuit (22) connected to the further input (18),
a multiplexer (23) which is coupled to the translation circuit (22) and which serves to receive cells from pre-processing circuits (8),
a demultiplexer (24) which is coupled to the further output (21) and which serves to supply cells to the post-processing circuit (9), and
a control circuit (25) which at least serves to control the switching block (15).

## Revendications

1. Dispositif de commutation fonctionnant selon la mode de transfert asynchrone avec un en-tête (1, 10) qui est prévu pour le changement de contenus sélectionnés dans l'en-tête d'une cellule,
**caractérisé en ce**
**qu'**un circuit de prétraitement (2, 8) est respectivement couplé à chaque entrée de l'en-tête (1, 10) et un circuit de post-traitement (3, 9) est respectivement couplé à chaque sortie de l'en-tête (1, 10),
**que** chaque circuit de prétraitement (2, 8), après l'arrivée d'une cellule qui est affectée à une connexion virtuelle déterminée, est prévu pour l'enregistrement de contenus sélectionnés de l'en-tête de la cellule dans un tableau affecté lorsque aucune entrée n'est enregistrée pour cette connexion virtuelle ou que l'entrée enregistrée diffère du contenu sélectionné de l'en-tête,
**qu'**un tableau qui est prévu pour l'enregistrement d'un contenu sélectionné délivré par un circuit de prétraitement (2, 8) pour une connexion virtuelle est affecté à chaque circuit de post-traitement (3, 9) et
**qu'**un circuit de post-traitement (3, 9) est prévu après la réception d'une cellule d'une connexion virtuelle déterminée pour le remplacement d'un contenu sélectionné d'un en-tête de cette cellule par l'entrée de cette connexion virtuelle dans le tableau affecté.

2. Dispositif de commutation selon la revendication 1,
**caractérisé en ce**
**qu'**un circuit de prétraitement (2, 8) est prévu pour l'enregistrement du contenu sélectionné d'un en-tête dans le tableau affecté pour la production d'une cellule qui contient dans sa zone d'information le contenu sélectionné de l'en-tête, et
**que** le circuit de prétraitement (2, 8) est prévu pour la transmission de cette cellule par l'intermédiaire de l'en-tête (1, 10) vers au moins un circuit de post-traitement (3, 9).

3. Dispositif de commutation selon la revendication 1,
**caractérisé en**
**ce qu'**un circuit de post-traitement (3, 9) est prévu pour la réception d'une cellule avec le contenu sélectionné d'un en-tête et pour l'enregistrement de ce contenu dans le tableau affecté.

4. Dispositif de commutation selon la revendication 1,
**caractérisé en ce**
**qu'**un circuit de prétraitement (2) est prévu aussi, hormis pour l'enregistrement du contenu sélectionné d'un en-tête dans le tableau affecté, pour la fourniture de ce contenu par l'intermédiaire d'un système de bus (7) commandé par un circuit de commande (6) pour la commande de l'en-tête (1) vers au moins un tableau affecté d'un circuit de post-traitement (9).

5. Dispositif de commutation selon la revendication 1,
**caractérisé en ce**
**que** l'en-tête (10) contient plusieurs composants de commutation (11 à 14) montés en anneau qui comprennent
- respectivement un bloc de commutation (15) avec des entrées annulaires (16, 17) et des sorties annulaires (109, 20) et une autre entrée (18) et une autre sortie (21),
- un circuit de transposition (22) raccordé à l'autre entrée (18),
- un multiplexeur (23) couplé au circuit de transposition (22) pour la réception de cellules par les circuits de prétraitement (8),
- un démultiplexeur (24) couplé à l'autre sortie (21) pour la fourniture de cellules à des circuits de post-traitement (9) et
- un circuit de commande (25) au moins pour la commande du bloc de commutation (15).
